# EUROPÄISCHE PATENTSCHRIFT

(11) **EP 3 108 782 B1**
(45) Veröffentlichungstag und Bekanntmachung des Hinweises auf die Patenterteilung: **15.11.2017**
(21) Anmeldenummer: 16179480.5
(22) Anmeldetag: 14.09.2015
(51) Int. Cl.: A47J 43/046, A47J 43/07, A47J 27/00, A47J 27/04, F28D 20/02

(54) **GARAUFSATZ FÜR EIN AUFHEIZBARES GEFÄSS EINER KÜCHENMASCHINE UND KÜCHENMASCHINE MIT EINEM GARAUFSATZ**
COOKING ATTACHMENT FOR A HEATABLE CONTAINER OF A KITCHEN APPLIANCE AND KITCHEN APPLIANCE WITH A COOKING ATTACHMENT
ACCESSOIRE DE CUISSON POUR UN RECIPIENT POUVANT ETRE CHAUFFE D'UN ROBOT MENAGER ET ROBOT MENAGER COMPRENANT UN ACCESSOIRE DE CUISSON

(30) Priorität: 19.09.2014 DE 102014113552
(43) Veröffentlichungstag der Anmeldung: 28.12.2016
(62) Teilanmeldung aus: 15184971.8
(73) Patentinhaber: Vorwerk & Co. Interholding GmbH, 42275 Wuppertal (DE)
(72) Erfinder: Weber, Klaus-Martin, 42109 Wuppertal (DE); Schomacher, Jutta, 42489 Wülfrath (DE)
(74) Vertreter: Müller, Enno

(56) Entgegenhaltungen:
- EP-A1- 2 622 995
- WO-A1-2006/086794
- DE-A1-102011 000 452
- US-A- 5 794 524

## Beschreibung

Die Erfindung betrifft zunächst einen Garaufsatz für ein aufheizbares Gefäß einer Küchenmaschine, wobei der Garaufsatz eine Garaufsatzwandung aufweist, welche zumindest in einem an dem Gefäß anordenbaren Bodenbereich Bodenöffnungen aufweist, durch welche aus dem Gefäß austretender Dampf in den Garaufsatz eintreten und Kondensat in das Gefäß zurückfließen kann.

Weiter betrifft die Erfindung eine Küchenmaschine, insbesondere ein Kochmixgerät, mit einem solchen Garaufsatz.

Garaufsätze der vorgenannten Art sind im Stand der Technik bekannt. Die Druckschrift DE 10 2011 000 452 A1 offenbart beispielsweise eine elektrische Küchenmaschine mit einem beheizbaren Rührgefäß und einem Garaufsatz, in dessen Bodenbereich partiell Perforierungen angeordnet sind, durch welche Dampf aus dem Rührgefäß in den Garaufsatz eintreten kann. Sich innerhalb des Garaufsatzes bildendes Kondensat kann wiederum durch die Perforierungen zurück in das Rührgefäß fließen.

Grundsätzlich kann der Garaufsatz unmittelbar an dem Rührgefäß der Küchenmaschine angeordnet sein, oder mittels eines das Rührgefäß zumindest teilweise verschließenden Deckels. Der Deckel kann bevorzugt eine zentrale Gefäßdeckelöffnung aufweisen, welche in Zuordnungsstellung des Deckels zu dem Garaufsatz in vertikaler Überdeckung mit den Bodenöffnungen (Perforierungen) des Garaufsatzes liegt.

Zum Stand der Technik ist weiter auf die DE 10 2010 000 451 A1 zu verweisen.

Die Erfindung beschäftigt sich mit der Aufgabenstellung, einen solchen Garaufsatz anzugeben oder einen Küchenmaschine mit einem Garaufsatz, dass in dem Garaufsatz enthaltene Speisen unabhängig von ihrer Position innerhalb des Zubereitungsraumes des Garaufsatzes optimal gegart werden und nach der Zubereitung warmgehalten werden können.

Diese Aufgabe ist beim Gegenstand des Anspruches 1 gelöst, wobei darauf abgestellt ist, dass die Garaufsatzwandung zumindest partiell durch ein Phasenwechselmaterial (PCM)-Polymer-Zusammensetzung gebildet ist, wobei die PCM-Polymer-Zusammensetzung in Richtung einer Flächennormalen der Garaufsatzwandung zumindest auf einer einem Zubereitungsraum des Garaufsatzes abgewandten Seite der Garaufsatzwandung angeordnet ist.

Die Aufgabe ist hinsichtlich der Küchenmaschine dadurch gelöst, dass diese mit einem Garaufsatz in der vorstehend beschriebenen Ausführung versehen ist.

Die PCM-Polymer-Zusammensetzung kann die Garaufsatzwandung in Richtung der Flächennormalen vollständig durchsetzen, alternativ ist es jedoch auch möglich, dass die Zusammensetzung lediglich auf der dem Zubereitungsraum abgewandten Seite der Garaufsatzwandung angeordnet ist.

In letzterem Fall können in dem Zubereitungsraum des Garaufsatzes angeordnete Speisen nicht mit der PCM-Polymer-Zusammensetzung in Kontakt treten. Die Garaufsatzwandung kann somit auf der den Zubereitungsraum zugewandten Seite ein anderes Material aufweisen, welches vorteilhaft ebenfalls eine optimale Wärmeleitfähigkeit besitzt und zudem auch die Anforderungen in Bezug auf Hitzebeständigkeit, Reinigbarkeit und Lebensmittelechtheit der Oberfläche gewährleistet.

Insbesondere sind auch Varianten denkbar, bei welchen die PCM-Polymer-Zusammensetzung fensterartig in die Garaufsatzwandung eingebettet ist, wobei die Fenster optimal an den Positionen angeordnet werden, wo ein erhöhter Wärmeeintrag in die Speisen gewünscht ist.

Als Phasenwechselmaterial-Polymer-Zusammensetzung eignen sich beispielsweise die in der Offenlegungsschrift WO 2009/118344 A1 genannten Zusammensetzungen. Diese Zusammensetzungen sind vorteilhaft ausschwitzarm bzw. ausschwitzfrei, mechanisch fest und wärmeformbeständig und weisen darüber hinaus eine verbesserte Wärmeleitfähigkeit auf. Die für die Zusammensetzung verwendeten Polymere sind vorzugsweise Polyethylene, insbesondere Low Density Polyethylene (LDPE), beispielsweise auch Diblock- und Triblock- Copolymere. In Bezug auf die konkrete Zusammensetzung wird hiermit auf die vorgenannte Offenbarung verwiesen, deren Offenbarungsgehalt hier mit einbezogen sein soll.

Die Innenwand und die Außenwand des Garaufsatzes können separat voneinander ausgebildet sein. Es empfiehlt sich dabei, dass die Innenwand des Garaufsatzes, welche dem Zubereitungsraum des Garaufsatzes benachbart ist, ein Material mit einer möglichst hohen Wärmeleitfähigkeit aufweist, während die Außenwand, welche dem Zubereitungsraum des Garaufsatzes abgewandt ist und die äußere Wandung des Garaufsatzes bildet, ein Material mit einer möglichst geringen Wärmeleitfähigkeit aufweist, um die innerhalb des Garaufsatzes befindliche Wärmeenergie möglichst lange zu speichern und somit eine optimale Wärmeisolierung gegenüber der Umgebung des Garaufsatzes bereitzustellen. Durch die in dem Bodenbereich des Garaufsatzes ausgebildeten Bodenöffnungen kann Dampf in den Garaufsatz gelangen, wobei die in dem Dampf enthaltene Wärmeenergie durch die hohe Wärmeleitfähigkeit der Innenwand gleichmäßig innerhalb des Zubereitungsraumes verteilt werden kann und aufgrund der geringen Wärmeleitfähigkeit der Außenwand innerhalb des Garaufsatzes gespeichert wird. Die doppelwandige Ausbildung des Garaufsatzes ermöglicht somit ein möglichst langes Warmhalten der in dem Garaufsatz enthaltenen Speisen unabhängig davon, ob der Garaufsatz weiterhin mit Dampf beaufschlagt wird oder nicht.

Besonders vorteilhaft sind die Innenwand und die Außenwand des Garaufsatzes durch einen Zwischenraum voneinander beabstandet. In einer besonders einfachen Ausgestaltung kann der Zwischenraum mit Luft gefüllt sein, so dass dieser - zusätzlich zu der Außenwand - als isolierende Zwischenschicht wirkt.

Darüber hinaus wird vorgeschlagen, dass zwischen der Innenwand und der Außenwand ein Wärmespeichermedium angeordnet ist, das durch seine spezifische Wärmekapazität möglichst viel Wärmeenergie speichern kann. Gemäß einer besonders einfachen Ausgestaltung kann dieses Medium Wasser sein. Dabei heizt der innerhalb des Rührgefäßes der Küchenmaschine entstehende Dampf die wärmeleitende Innenwand des Garaufsatzes auf, wobei die Wärmeenergie zumindest teilweise auf das in dem Zwischenraum enhaltene Wärmespeichermedium übertragen und dort gespeichert wird. Sobald dem Garaufsatz keine weitere Wärmeenergie aus dem Rührgefäß zugeführt wird, kann die in dem Wärmespeichermedium gespeicherte Wärmeenergie mittels der wärmeleitenden Eigenschaft der Innenwand auf die in dem Zubereitungsraum des Garaufsatzes enthaltenen Speisen übertragen werden, wodurch diese warmgehalten werden.

Es empfiehlt sich, dass die Innenwand ein Material mit einer Wärmeleitfähigkeit größer als 50 W/ (mK), insbesondere größer als 100 W/ (mK) aufweist. In diesem Sinne bieten sich insbesondere Metalle und/oder Graphit zur Ausbildung der Innenwand an. Besonders bevorzugt sind Graphit mit einer Wärmeleitfähigkeit von ungefähr 120 bis 170 W/ (mK), Kupfer mit einer Wärmeleitfähigkeit von ungefähr 400 W/ (mK) sowie Aluminium mit einer Wärmeleitfähigkeit von ungefähr 235 W/(mK).

Es wird vorgeschlagen, dass die Innenwand einen Kunststoff aufweist, in welchen Graphitpartikel eingebettet sind. Der Kunststoff als Trägermaterial bietet die für einen Garaufsatz benötigten Eigenschaften, wie beispielsweise Hitzebeständigkeit, Reinigbarkeit, Lebensmittelechtheit und so weiter. Je nach der verwendeten Anzahl und Größe der Graphitpartikel kann die Wärmeleitfähigkeit der Innenwand variiert werden. Vorteilhaft können die Graphitpartikel beispielsweise oberflächenfern in die Innenwand eingebettet sein, so dass diese durch eine partikelfreie Kunststoffschicht von dem Zubereitungsraum getrennt sind.

Es wird vorgeschlagen, dass die Innenwand eine metallische Folie oder eine metallische Beschichtung aufweist. Die metallische Folie oder metallische Beschichtung kann alternativ oder zusätzlich zu der vorgenannten Ausgestaltung mit in Kunststoff eingebetteten Graphitpartikeln vorgesehen sein. Es empfiehlt sich, für die metallische Folie oder die metallische Beschichtung ein Metall mit einer möglichst hohen Wärmeleitfähigkeit vorzusehen. In Frage kommen insbesondere Kupfer oder Aluminium. Die Folie oder die Beschichtung kann an der in Richtung des Zubereitungsraums weisenden Seite der Innenwand angeordnet sein, im Inneren der Innenwand oder an der den Zwischenraum begrenzenden Seite der Innenwand. Beispielsweise kann die Innenwand so ausgebildet sein, dass diese ausgehend von dem Zwischenraum zuerst eine metallische Folie oder Beschichtung aufweist, dann einen Kunststoff mit darin eingebetteten Graphitpartikeln und schließlich eine ausschließlich Kunststoff aufweisende Schicht, welche in Kontakt mit den zuzubereitenden Speisen steht. Die an den Zwischenraum angrenzende metallische Folie oder metallische Beschichtung dient dabei dazu, den Wärmeübergang von dem Material des Zwischenraumes auf das Material der Innenwand zu optimieren.

Es wird vorgeschlagen, dass die Außenwand ein Material mit einer Wärmeleitfähigkeit kleiner als 20 W/ (mK), insbesondere kleiner als 0,5 W/ (mK) aufweist. Vorteilhaft weist die Außenwand des Garaufsatzes eine möglichst geringe Wärmeleitfähigkeit auf, damit die in dem Garaufsatz vorhandene Wärmeenergie möglichst verlustarm gespeichert werden kann. Geeignet sind insbesondere Polypropylen (PP) mit einer Wärmeleitfähigkeit von ca. 0,23 W/ (mK), Polyethylen (PE) mit einer Wärmeleitfähigkeit von ca. 0,38 W/ (mK), Polycarbonat (PC) mit einer Wärmeleitfähigkeit von 0,2 W/ (mK), Polymethylmethacrylat (PMMA) mit einer Wärmeleitfähigkeit von 0,19 W/ (mK) oder Polyethylenterephthalat (PET) mit einer Wärmeleitfähigkeit von 0,035 W/(mK). Darüber hinaus bieten sich auch andere Kunststoffe mit einer ähnlich geringen Wärmeleitfähigkeit an, wobei diese jedoch stets auch im Hinblick auf die Hitzebeständigkeit und Reinigbarkeit geeignet sein sollten.

Des Weiteren wird vorgeschlagen, dass der zwischen der Innenwand und der Außenwand ausgebildete Zwischenraum ein Wärmespeichermedium mit einer spezifischen Wärmekapazität größer als 2 kJ/(kgK), insbesondere 4 kJ/(kgK) aufweist. Dadurch kann innerhalb des Zwischenraums eine möglichst große Menge Wärmeenergie gespeichert werden, welche zur Warmhaltung der Speisen nach Beendigung der Dampferzeugung innerhalb des Rührgefäßes zur Verfügung steht.

Es empfiehlt sich, dass das Wärmespeichermedium ein Phasenwechselmaterial (phase change material, PCM), eine Phasenwechselmaterial-Polymer-Zusammensetzung oder Wasser aufweist. Gemäß einer besonders einfachen Ausgestaltung ist das Wärmespeichermedium Wasser, welches eine besonders hohe spezifische Wärmekapazität von 4,182 kJ/ (kgK) aufweist. Als Wärmespeichermedium sind ebenfalls die sogenannten Phasenwechselmaterialien geeignet, auch Latentwärmespeicher genannt, welche hohe spezifische Wärmekapazitäten von größer als 2 kJ/(kgK) aufweisen. Die Phasenwechselmaterialien zeichnen sich dadurch aus, dass diese Wärmeenergie verlustarm und über lange Zeit speichern können. Die latente Schmelzwärme, d. h. die absorbierbare Wärmeenergiemenge, ist wesentlich größer als die Wärmeenergiemenge, die aufgrund der spezifischen Wärmekapazität des Materials (ohne den Phasenumwandlungseffekt) gespeichert werden kann. In Alltagsgegenständen werden diese Phasenwechselmaterialien beispielsweise in Wärmekissen und Kühlakkus verwendet. Diese Wärmespeichermedien werden unter Nutzung ihres Phasenübergangs von fest nach flüssig und umgekehrt genutzt. Beim Aufladen des Wärmespeichermediums mit Wärmeenergie wird das Wärmespeichermedium geschmolzen, wobei sehr viel Wärmeenergie aufgenommen werden kann. Die Freigabe der gespeicherten Wärmeenergiemenge findet bei dem Erstarren des Wärmespeichermediums statt, wobei die zuvor aufgenommene große Wärmemenge als Erstarrungswärme wieder an die Umgebung abgegeben wird. Der Vorteil dabei ist, dass in einem kleinen durch die Schmelztemperatur des jeweiligen Wärmespeichermediums vorgegebenen Temperaturbereich eine große Menge Wärmeenergie in einer relativ geringen Masse gespeichert werden kann. Hinzu kommt, dass die Wärmeenergie aufgrund der Nutzung metastabiler Zustände des Wärmespeichermediums ohne thermische Isolierung und sehr verlustarm gespeichert werden kann.

Das Wärmespeichermedium Wasser kann ebenfalls zu den Phasenwechselmaterialien gerechnet werden. Beispielsweise wird beim Gefrieren von Wasser, d. h. dem Phasenübergang von flüssig nach fest, ungefähr eine so große Wärmemenge frei wie zum Erwärmen derselben Menge Wasser von 0° C auf 80° C benötigt wird. Die spezifische Phasenumwandlungsenthalpie ist somit im Vergleich zur spezifischen Wärmekapazität erhöht. Neben Wasser kommen auch andere Phasenwechselmaterialien in Frage, beispielsweise Dikaliumhydrogenphosphat-Hexahydrat oder Natriumacetat-Trihydrat.

Des Weiteren wird mit der Erfindung vorgeschlagen, dass der Zwischenraum zwischen der Innenwand und der Außenwand zumindest zwei in Richtung einer Flächennormalen der Garaufsatzwandung hintereinander angeordnete Raumbereiche aufweist, zwischen welchen mindestens ein Trennelement angeordnet ist, wobei eine strömungstechnische Verbindung zwischen den Raumbereichen gegeben ist. Somit erstreckt sich ein erster Raumbereich entlang der Innenwand, während ein zweiter Raumbereich entlang der Außenwand angeordnet ist. Es ergeben sich somit zwei im Wesentlichen parallel zueinander verlaufende Raumbereiche, welche die Garaufsatzwandung entlang deren Längserstreckung durchsetzen. Die Raumbereiche sind vorteilhaft durch ein Trennelement oder mehrere Trennelemente getrennt, wobei das Trennelement oder die Trennelemente Öffnungen zur Verbindung der beiden Raumbereiche aufweisen. Der Zwischenraum weist folglich vorteilhaft zwei voneinander getrennte und nur durch vereinzelte Öffnungen verbundene Raumbereiche auf, zwischen welchen sich bei der Erwärmung des Wärmespeichermediums eine Strömung ausbildet, so dass eine Umwälzung des Wärmespeichermediums innerhalb des Zwischenraumes erfolgen kann. Es kann auch vorgesehen sein, dass mehr als zwei Raumbereiche ausgebildet sind, wobei zwischen benachbarten Raumbereichen jeweils Trennelemente mit Öffnungen vorgesehen sind.

Im Folgenden wird die Erfindung anhand von Ausführungsbeispielen näher erläutert. Es zeigen:
- Fig. 1:: eine Küchenmaschine mit einem Gefäß und einem daran angeordneten Garaufsatz,
- Fig. 2:: einen Schnitt durch das Gefäß und den Garaufsatz gemäß Figur 1,
- Fig. 3:: den Garaufsatz in Alleinstellung,
- Fig. 4:: eine Detailansicht einer Garaufsatzwandung des Garaufsatzes gemäß einer ersten Ausführungsform,
- Fig. 5:: eine Detailansicht einer Garaufsatzwandung gemäß einer zweiten Ausführungsform.

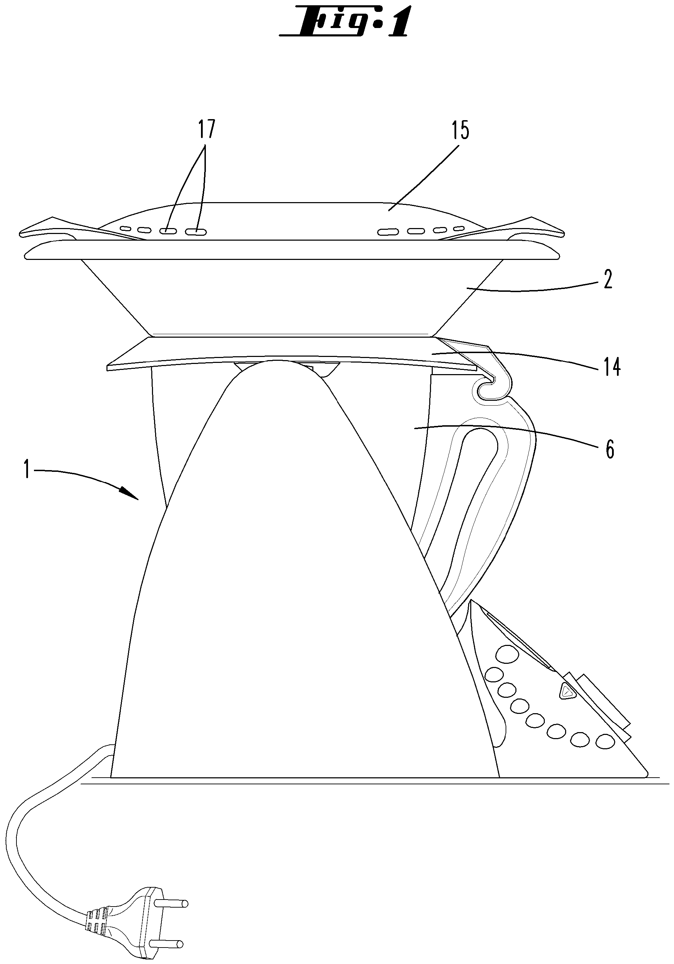

In Figur 1 ist eine Küchenmaschine 1 dargestellt. Diese Küchenmaschine 1 ist beispielsweise als Kochmixgerät ausgestaltet. Die Küchenmaschine 1 weist ein Gefäß 6 (hier: Rührgefäß) mit einem Gefäßdeckel 14 auf. Der Gefäßdeckel 14 verfügt über eine zentrale Gefäßdeckelöffnung 16, so dass in dem Gefäß 6 erzeugter Dampf durch die Gefäßdeckelöffnung 16 in einen an dem Gefäß 6 angeordneten Garaufsatz 2 strömen kann. Der Garaufsatz 2 ist mit einem Garaufsatzdeckel 15 verschlossen, welcher Garaufsatzdeckelöffnungen 17 zum Entweichen von Dampf aufweist. Die Küchenmaschine 1 weist eine Heizeinrichtung (nicht dargestellt) zur Aufheizung des Gefäßes 6 auf.

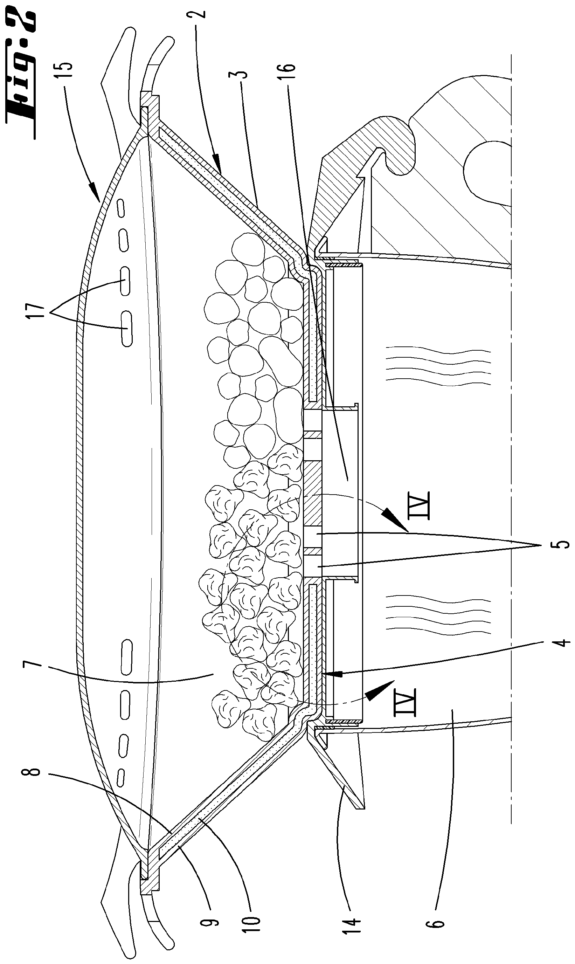

Die in Figur 2 dargestellte Schnittansicht zeigt einen oberen Bereich des Gefäßes 6 mit dem Gefäßdeckel 14 sowie den Garaufsatz 2 mit dem Garaufsatzdeckel 15. Der Gefäßdeckel 14 verschließt das Gefäß 6 zumindest teilweise, wobei an dem Gefäßdeckel 14 eine zentrale Gefäßdeckelöffnung 16 ausgebildet ist, durch welche Dampf aus dem Gefäß 6 in den Garaufsatz 2 strömen kann.

Der Garaufsatz 2 weist eine Garaufsatzwandung 3 auf, welche doppelwandig ausgebildet ist mit einer Innenwand 8 und einer Außenwand 9. Die Innenwand 8 und die Außenwand 9 sind durch einen Zwischenraum 10 voneinander beabstandet. Der Bodenbereich 4 der Garaufsatzwandung 3 weist darüber hinaus Bodenöffnungen 5 auf, welche in vertikaler Richtung mit der Gefäßdeckelöffnung 16 des Gefäßdeckels 14 korrespondieren. Der Garaufsatz 2 weist darüber hinaus einen durch die Garaufsatzwandung 3 definierten Zubereitungsraum 7 auf, in welchem Speisen für einen Garvorgang angeordnet werden können. Der Garaufsatz 2 kann bedarfsweise mit dem Garaufsatzdeckel 15 verschlossen werden. Dieser Garaufsatzdeckel 15 kann gegebenenfalls Garaufsatzdeckelöffnungen 17 zur Entweichung von Dampf aus dem Zubereitungsraum 7 aufweisen.

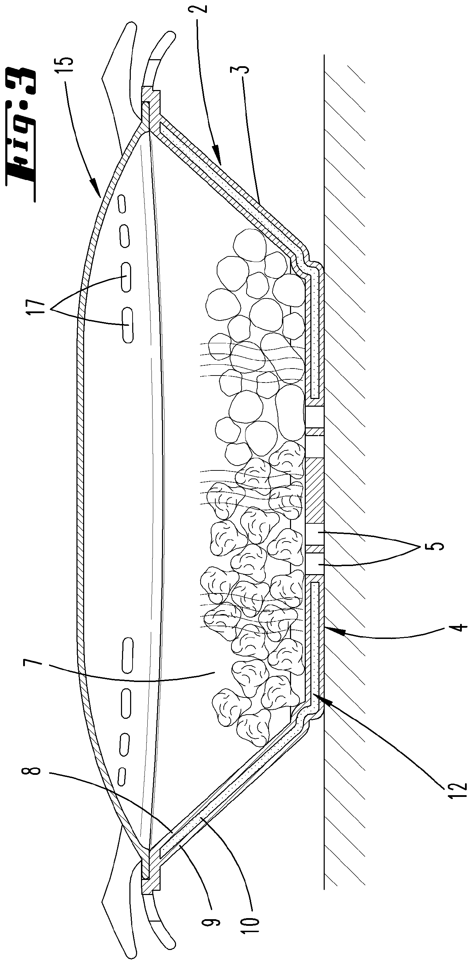

In Figur 3 ist der Garaufsatz 2 ohne Anordnung an einem Gefäß 6 dargestellt. In diesem Zustand ist der Garvorgang der in dem Zubereitungsraum 7 des Garaufsatzes 2 enthaltenen Speisen im Wesentlichen abgeschlossen, so dass der Garaufsatz 2 in seiner erfindungsgemäßen Funktion als Warmhaltegefäß verwendet wird.

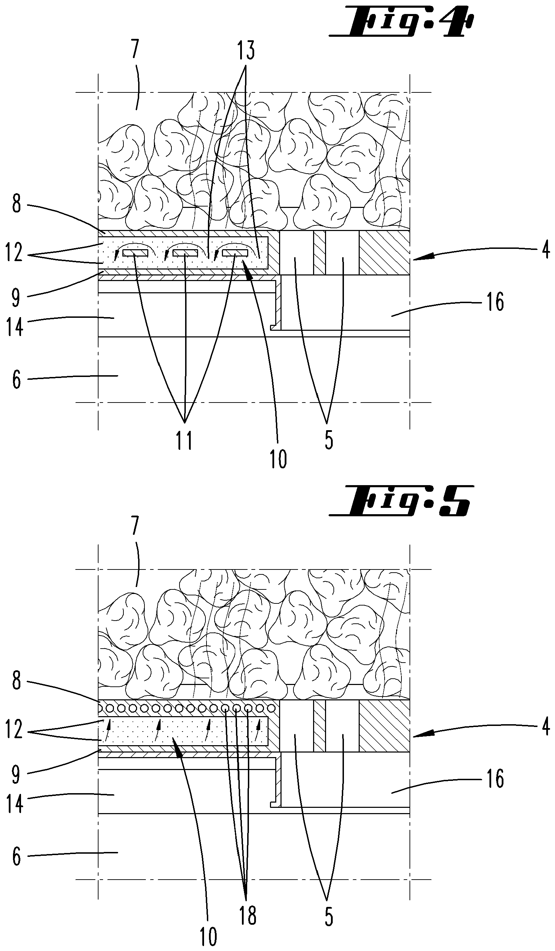

Figur 4 zeigt eine Detailansicht eines Teilbereiches des Gefäßes 6 und des Garaufsatzes 2. Der gezeigte Teilbereich befindet sich im Bereich der Gefäßdeckelöffnung 16 des Gefäßdeckels 14. Der gezeigte Ausschnitt der Garaufsatzwandung 3 weist einen zwischen der Innenwand 8 und der Außenwand 9 angeordneten Zwischenraum 10 auf, welcher zwei Raumbereiche 12 beinhaltet, die durch Trennelemente 11 getrennt sind. Die Raumbereiche 12 verlaufen jeweils parallel zu der Innenwand 8 und der Außenwand 9 sowie auch parallel zueinander. Die Trennelemente 11 sind Teilstücke einer in Längserstreckung der Garaufsatzwandung 3 verlaufenden Trennwand. Zwischen der Innenwand 8 und der Außenwand 9, d. h. in den Raumbereichen 12, ist ein Wärmespeichermedium angeordnet, welches vorteilhaft ein Phasenwechselmaterial ist.

Figur 5 zeigt ebenfalls einen Teilbereich des Gefäßes 6 sowie des Garaufsatzes 2 im Bereich der Gefäßdeckelöffnung 16 des Gefäßdeckels 14. Der dargestellte Teilbereich der Innenwand 8 weist einen Kunststoff auf, in welchen Graphitpartikel 18 eingebettet sind. Der zwischen der Innenwand 8 und der Außenwand 9 ausgebildete Zwischenraum 10 besteht hier aus einem einzigen Raumbereich 12.

Die Erfindung funktioniert so, dass der Nutzer der Küchenmaschine 1 das Gefäß 6 mit einer Flüssigkeit befüllt und mittels des Gefäßdeckels 14 verschließt. Auf dem Gefäßdeckel 14 wird der Garaufsatz 2 angeordnet. In den Garaufsatz 2 werden zu garende Lebensmittel eingebracht. Der Garaufsatz 2 kann mit dem Garaufsatzdeckel 15 verschlossen werden. Alternativ zu der gezeigten Anordnung des Garaufsatzes 2 an dem Gefäß 6 mittels des Gefäßdeckels 4 ist es ebenfalls möglich, den Garaufsatz 2 unmittelbar mit dem Gefäß 6 zu verbinden.

Die in dem Gefäß 6 enthaltene Flüssigkeit wird mittels einer Heizeinrichtung erwärmt. Sobald der Siedepunkt der Flüssigkeit erreicht ist, steigt Dampf aus dem Gefäß 6 auf und entweicht durch die Gefäßdeckelöffnung 16 in den Garaufsatz 2. Der Dampf gelangt durch die Bodenöffnungen 5 des Garaufsatzes 2 in den Zubereitungsraum 7. Ein Teil der Wärmeenergie gelangt über die wärmeleitend ausgebildete Innenwand 8 in den Zwischenraum 10, welcher mit dem Wärmespeichermedium gefüllt ist. Die Innenwand 8 weist dazu beispielsweise eine metallische Folie auf, die für eine Verteilung der Wärmeenergie entlang der Innenwand 8 sorgt. Das Wärmespeichermedium ist gemäß der gezeigten Ausführungsform Wasser, welches eine hohe spezifische Wärmekapazität aufweist und somit eine große Wärmeenergiemenge speichern kann. Je nach der eingebrachten Wärmeenergiemenge relativ zu dem Volumen des Zwischenraumes 10 wird die Wärmeenergie mehr oder weniger homogen über den Zwischenraum 10 verteilt. Vorteilhaft ist das Volumen so bemessen, dass es zu einer homogenen Verteilung der Wärme kommt.

Sobald der Dampfeintritt in den Garaufsatz 2 gestoppt wird, entfällt auch der Wärmeenergieeintrag von außen in den Garaufsatz 2. Die in dem Zubereitungsraum 7 des Garaufsatzes 2 enthaltenen Speisen geben daher Wärmeenergie an die Umgebung ab. Sobald die dem Zubereitungsraum 7, d. h. den Speisen, zugewandte Oberfläche der Innenwand 8, eine geringere Temperatur aufweist als die den Zwischenraum 10 begrenzende Oberfläche der Innenwand 8, wird dem Zwischenraum 10 aufgrund der wärmeleitenden Eigenschaft der Innenwand 8 Wärmeenergie entzogen, so dass die in dem Zubereitungsraum 7 enthaltenen Speisen gewärmt werden. Die Abkühlung der Speisen wird somit verzögert, so dass der Nutzer des Garaufsatzes 2 kein separates Isoliergefäß oder eine separate Heizmöglichkeit benötigt, um die zubereiteten Speisen warm zu halten.

Aufgrund der Abgabe von Wärmeenergie aus dem Zwischenraum 10 reduziert sich die Temperatur des Wärmespeichermediums. Sofern der Zwischenraum 10 zwei Raumbereiche 12 aufweist (Figur 4) reduziert sich zuerst die Temperatur des Wärmespeichermediums innerhalb des der Innenwand 8 nächstliegenden Raumbereiches 12 gegenüber dem der Außenwand 9 nächstliegenden Raumbereich 12. Die dabei entstehende Temperaturdifferenz verursacht eine zirkulierende Strömung zwischen den beiden Raumbereichen 12 durch die innerhalb des Trennelementes 11 ausgebildeten Öffnungen 13. Dabei erfolgt ein Temperaturausgleich zwischen den beiden Raumbereichen 12, so dass kontinuierlich Wärmeenergie aus dem, dem Zubereitungsraum 7 abgewandten Raumbereich 12 in den, dem Zubereitungsraum 7 nächstliegenden Raumbereich 12 abgegeben wird.

Die in Figur 5 dargestellte Garaufsatzwandung 3 beinhaltet einen Zwischenraum 10 mit nur einem einzigen Raumbereich 12. Die Innenwand 8 des Zwischenraumes 10 besteht aus einem Kunststoff, in welchem Graphitpartikel, hier Graphitkugeln, eingebettet sind. Die Außenwand 9 weist ein Kunststoffmaterial mit einer geringen Wärmeleitfähigkeit (ohne Graphitpartikel) auf, so dass eine isolierende Wirkung gegenüber der Umgebung des Garaufsatzes 2 gegeben ist. Gemäß diesem Ausführungsbeispiel erfolgt die Abgabe von in dem Zwischenraum 10 gespeicherter Wärmeenergie so, dass das Wärmespeichermedium bei dem Wegfall des Dampfeintrags von dem Gefäß 6 in den Garaufsatz 2 Wärmeenergie über die Innenwand 8 an die in dem Zubereitungsraum 7 enthaltenen Speisen abgibt. Die in der Innenwand 8 eingebetteten Graphitpartikel weisen eine große Wärmeleitfähigkeit zur Abgabe der Wärmeenergie an die Speisen auf. Gleichzeitig sorgt das Kunststoffmaterial, in welchem die Graphitpartikel 18 eingebettet sind, für die notwendige Oberflächenbeschaffenheit der Garaufsatzwandung 3 im Bereich des Zubereitungsraumes 7. Dadurch ist sichergestellt, dass die Graphitpartikel 18 nicht mit den zuzubereitenden Speisen in Berührung kommen und gleichzeitig auch die für den Nutzer gewohnte Oberflächeneigenschaft der Garaufsatzwandung 3 bestehen bleibt. Die in dem Zwischenraum 10, d. h. in dem Wärmespeichermedium enthaltene Wärmeenergie kann aufgrund der isolierenden Wirkung der Außenwand 9 ausschließlich bzw. hauptsächlich nur in Richtung des Zubereitungsraumes 7 abgeleitet werden, so dass die darin enthaltenen Speisen möglichst lange warmgehalten werden können.

### Bezugszeichenliste

- 1: Küchenmaschine
- 2: Garaufsatz
- 3: Garaufsatzwandung
- 4: Bodenbereich
- 5: Bodenöffnungen
- 6: Gefäß
- 7: Zubereitungsraum
- 8: Innenwand
- 9: Außenwand
- 10: Zwischenraum
- 11: Trennelement
- 12: Raumbereich
- 13: Öffnungen
- 14: Gefäßdeckel
- 15: Garaufsatzdeckel
- 16: Gefäßdeckelöffnung
- 17: Garaufsatzdeckelöffnung
- 18: Graphitpartikel

## Patentansprüche

1. Garaufsatz (2) für ein aufheizbares Gefäß (6) einer Küchenmaschine (1), wobei der Garaufsatz (2) eine Garaufsatzwandung (3) aufweist, welche zumindest in einem an dem Gefäß (6) anordenbaren Bodenbereich (4) Bodenöffnungen (5) aufweist, durch welche aus dem Gefäß (6) austretender Dampf in den Garaufsatz (2) eintreten und Kondensat in das Gefäß (6) zurückfließen kann, **dadurch gekennzeichnet, dass** die Garaufsatzwandung (3) zumindest partiell durch eine Phasenwechselmaterial (PCM)-Polymer-Zusammensetzung gebildet ist, wobei die PCM-Polymer-Zusammensetzung in Richtung der Flächennormalen der Garaufsatzwandung (3) zumindest auf einer einem Zubereitungsraum (7) des Garaufsatzes (2) abgewandten Seite der Garaufsatzwandung (3) angeordnet ist.

2. Garaufsatz (2) nach Anspruch 1, **dadurch gekennzeichnet, dass** die PCM-Polymer-Zusammensetzung die Garaufsatzwandung (3) in Richtung der Flächennormalen vollständig durchsetzt.

3. Garaufsatz (2) nach einem der vorhergehenden Ansprüche, **dadurch gekennzeichnet, dass** die PCM-Polymer-Zusammensetzung fensterartig in die Garaufsatzwandung eingebettet ist.

4. Garaufsatz (2) nach einem der vorhergehenden Ansprüche, **dadurch gekennzeichnet, dass** die Garaufsatzwandung (3) zumindest partiell doppelwandig mit einer einen Zubereitungsraum (7) des Garaufsatzes (2) begrenzenden Innenwand (8) und einer davon separat ausgebildeten, insbesondere durch einen Zwischenraum (10) von der Innenwand (8) beabstandeten, Außenwand (9) ausgebildet ist.

5. Garaufsatz (2) nach Anspruch 4, **dadurch gekennzeichnet, dass** die Innenwand (8) ein Material mit einer Wärmeleitfähigkeit größer als 50W/ (mK), insbesondere größer als 100 W/ (mk) aufweist.

6. Garaufsatz (2) nach einem der Ansprüche 4 oder 5, **dadurch gekennzeichnet, dass** die Innenwand (8) einen Kunststoff aufweist, in welchen Graphitpartikel eingebettet sind.

7. Garaufsatz (2) nach einem der Ansprüche 4 bis 6, **dadurch gekennzeichnet, dass** die Innenwand (8) eine metallische Folie oder eine metallische Beschichtung aufweist.

8. Garaufsatz (2) nach einem der Ansprüche 4 bis 7, **dadurch gekennzeichnet, dass** die Außenwand (9) ein Material mit einer Wärmeleitfähigkeit kleiner als 20 W/ (mK), insbesondere kleiner als 0,5 W/ (mK) aufweist.

9. Garaufsatz (2) nach einem der Ansprüche 4 bis 8, **dadurch gekennzeichnet, dass** der Zwischenraum (10) ein Wärmespeichermedium mit einer spezifischen Wärmekapazität größer als 2 KJ/(kr*K), insbesondere 4 kJ/(kg*K) aufweist.

10. Garaufsatz (2) nach Anspruch 9, **dadurch gekennzeichnet, dass** das Wärmespeichermedium ein Phasenwechselmaterial (PCM), eine Phasenwechselmaterial-Polymer-Zusammensetzung oder Wasser aufweist.

11. Garaufsatz (2) nach einem der Ansprüche 4 bis 10, **dadurch gekennzeichnet, dass** der Zwischenraum (10) zumindest zwei in Richtung einer Flächennormalen der Garaufsatzwandung (3) hintereinander angeordnete Raumbereiche (12) aufweist, zwischen welchen mindestens ein Trennelement (11) angeordnet ist, wobei eine strömungstechnische Verbindung zwischen den Raumbereichen (12) gegeben ist.

12. Küchenmaschine (1), insbesondere Kochmixgerät, mit einem Garaufsatz (2) nach einem der vorhergehenden Ansprüche

## Claims

1. Cooking attachment (2) for a heatable vessel (6) of a kitchen appliance (1), the cooking attachment (2) comprising a cooking attachment wall (3) that has bottom openings (5) at least in a bottom region (4) that can be arranged on the vessel (6), by means of which openings steam escaping from the vessel (6) can enter the cooking attachment (2) and condensation water can flow back into the vessel (6), **characterised in that** the cooking attachment wall (3) is formed, at least in part, by a phase change material (PCM)-polymer composition, the PCM-polymer composition, in the direction of the surface normal of the cooking attachment wall (3), being arranged at least on a side of the cooking attachment wall (3) that is remote from a preparation chamber (7) of the cooking attachment (2).

2. Cooking attachment (2) according to claim 1, **characterised in that** the PCM-polymer composition passes completely through the cooking attachment wall (3) in the direction of the surface normal.

3. Cooking attachment (2) according to either of the preceding claims, **characterised in that** the PCM-polymer composition is embedded in the cooking attachment wall in a window-like manner.

4. Cooking attachment (2) according to any of the preceding claims, **characterised in that** the cooking attachment wall (3) is designed, at least in part, to have two walls, comprising an inner wall (8) delimiting a preparation chamber (7) of the cooking attachment (2) and an outer wall (9) that is formed separately therefrom and is in particular spaced from the inner wall (8) by an intermediate space (10).

5. Cooking attachment (2) according to claim 4, **characterised in that** the inner wall (8) comprises a material having thermal conductivity of greater than 50 W/(mK), in particular greater than 100 W/(mK).

6. Cooking attachment (2) according to either claim 4 or claim 5, **characterised in that** the inner wall (8) comprises a plastics material in which graphite particles are embedded.

7. Cooking attachment (2) according to any of claims 4 to 6, **characterised in that** the inner wall (8) comprises a metal foil or a metal coating.

8. Cooking attachment (2) according to any of claims 4 to 7, **characterised in that** the outer wall (9) comprises a material having thermal conductivity of less than 20 W/(mK), in particular less than 0.5 W/(mK).

9. Cooking attachment (2) according to any of claims 4 to 8, **characterised in that** the intermediate space (10) comprises a heat storage medium having a specific heat capacity of greater than 2 kJ/(kr*K), in particular 4 kJ/kg*K).

10. Cooking attachment (2) according to claim 9, **characterised in that** the heat storage medium comprises a phase change material (PCM), a phase change material-polymer composition or water.

11. Cooking attachment (2) according to any of claims 4 to 10, **characterised in that** the intermediate space (10) comprises at least two spatial regions (12) that are arranged one behind the other in the direction of a surface normal of the cooking attachment wall (3), between which regions at least one separation element (11) is arranged, a flow connection being provided between the spatial regions (12).

12. Kitchen appliance (1), in particular a cooking blender, comprising a cooking attachment (2) according to any of the preceding claims.

## Revendications

1. Accessoire de cuisson (2) pour une cuve (6) pouvant être chauffée d'un robot de cuisine (1), dans lequel l'accessoire de cuisson (2) comprend une paroi (3) laquelle présente des ouvertures (5) au moins dans une zone de fond (4) apte à être agencée sur la cuve (6) et à travers lesquelles de la vapeur sortant de la cuve (6) peut pénétrer dans l'accessoire de cuisson (2) et du condensat peut retourner dans la cuve (6), **caractérisé en ce que** la paroi (3) de l'accessoire de cuisson est formée au moins partiellement par une composition matériau à changement de phase (MCP)- polymère, dans lequel la composition matériau à changement de phase (MCP)- polymère est agencée, dans la direction normale à la surface de la paroi (3) de l'accessoire de cuisson, au moins sur un côté de la paroi (3) de l'accessoire de cuisson qui est du côté opposé à une enceinte de préparation (7) de l'accessoire de cuisson (2).

2. Accessoire de cuisson (2) selon la revendication 1, **caractérisé en ce que** la composition MCP - polymère traverse complètement la paroi (3) de l'accessoire de cuisson dans la direction normale à la surface.

3. Accessoire de cuisson (2) selon l'une des revendications précédentes, **caractérisé en ce que** la composition MCP - polymère est intégrée à la façon de fenêtre(s) dans la paroi de l'accessoire de cuisson.

4. Accessoire de cuisson (2) selon l'une des revendications précédentes, **caractérisé en ce que** la paroi (3) de l'accessoire de cuisson est réalisée au moins partiellement à double paroi avec une paroi intérieure (8) délimitant une enceinte de préparation (7) de l'accessoire de cuisson et une paroi extérieure (9) formée séparément de celle-ci et, en particulier, en étant séparée de la paroi intérieure (8) par un espace intermédiaire (10).

5. Accessoire de cuisson (2) selon la revendication 4, **caractérisé en ce que** la paroi intérieure (8) comprend un matériau ayant une conductivité thermique supérieure à 50 W/(mK) et en particulier supérieure à 100 W/(mK).

6. Accessoire de cuisson (2) selon la revendication 4 ou 5, **caractérisé en ce que** la paroi intérieure (5) comprend un matériau plastique dans lequel sont incorporés des particules de graphite.

7. Accessoire de cuisson (2) selon l'une des revendications 4 à 6, **caractérisé en ce que** la paroi intérieure (8) présente une feuille métallique ou un revêtement métallique.

8. Accessoire de cuisson (2) selon l'une des revendications 4 à 7, **caractérisé en ce que** la paroi extérieure (9) comprend un matériau ayant une conductivité thermique inférieure à 20 W/(mK) et en particulier inférieure à 0,5 W/(mK).

9. Accessoire de cuisson (2) selon l'une des revendications 4 à 8, **caractérisé en ce que** l'espace intermédiaire (10) comprend un moyen d'accumulation de chaleur ayant une capacité de chaleur massique supérieure à 2 KJ/(kg*K), en particulier 4 kJ/(kg*K).

10. Accessoire de cuisson (2) selon la revendication 9, **caractérisé en ce que** le moyen d'accumulation de chaleur comprend un matériau à changement de phase (MCP), une composition matériau à changement de phase - polymère ou de l'eau.

11. Accessoire de cuisson (2) selon l'une des revendications 4 à 10, **caractérisé en ce que** l'espace intermédiaire (10) comprend au moins deux zones (12) agencées successivement dans la direction d'une normale à la surface de la paroi (3) de l'accessoire de cuisson, entre lesquelles est agencé au moins un élément de séparation (11), dans lequel une liaison d'écoulement de fluide est procurée entre les deux zones (12).

12. Robot de cuisine (1), en particulier un appareil de cuisson mixeur, comprenant un accessoire de cuisson (2) selon l'une des revendications précédentes.
